# EUROPEAN PATENT APPLICATION

(11) **EP 1 150 246 A2**
(43) Date of publication of application: **31.10.2001**
(21) Application number: 01109713.6
(22) Date of filing: 20.04.2001
(51) Int. Cl.: G06K 19/07, G06K 7/08

(54) **Method for storing information of a work, system for storing information of a work, medium for recording information of a work and information safe**

(30) Priority: 24.04.2000 JP 2000123288
(71) Applicant: LSI Card Corporation, Osaka 556-0005 (JP); Navitas Co., Limited, Sakai, Osaka 592 (JP)
(72) Inventor: Ohki, Shinji, Matsubara-shi, Osaka 580-0023 (JP); Kimura, Makoto, Suita-shi, Osaka 565-0873 (JP); Izuhara, Hiroshi, Sakai-shi, Osaka 592-8334 (JP)
(74) Representative: Dallmeyer, Georg, Dipl.-Ing.

(57) **Abstract**

A method, a system, a recording medium and an information safe are disclosed in which information for repairing and dismantling a work is written into a non-contact type IC card in a non-contact manner, and the IC card is left at or near the work so that correspondence relationships between the work and the information are not lost.

## Description

### BACKGROUND OF THE INVENTION

The present invention relates to a method of storing information of a work which is used for storing information for repairing and dismantling a constructional work or an architectural work, a system for storing information of a work, a medium for recording information of a work, and an information safe using a non-contact type IC card.

Conventionally, information such as drawings used for repairing a constructional work or an architectural work is kept by an engineering contractor and a client, so that the information can be referred in maintenance, repairing, reconstruction of the work, or the like.

After long years, however, the constructing company may be disorganized, or the owner may be changed to another person, and the information such as drawings may get scattered and lost.

Such a situation may occur in usual products, etc. Therefore, so-called CALS (Continuous Acquisition and Life-cycle Support) in which various kinds of information of products and works are accumulated in a database and held in common by the society so that such information is prevented from being scattered and lost has been invented, and it is being planned to realize this system.

A method for leaving a recording medium molded by a synthetic resin with a buried structure such as an earthen pipe including a manhole has been proposed.

In above-mentioned CALS, various kinds of information are concentrically accumulated in the database, and not attached to the products and works themselves. Therefore, the system has a problem in that, after long years, correspondence relationships among the information, and the products and works may become lost.

A recording medium which is molded by a synthetic resin has a substantial volume. In order to hold such a recording medium, therefore, a considerable capacity is required, thereby producing problems in that the holding place must be suitably selected, and that holding of such a medium cannot be performed by sticking. Such a medium has a further problem in that, after long years, the location where the medium is buried becomes indefinite and searches must be conducted when the information is required.

Furthermore, information recording media such as an IC card are sensitive to heat and hence have a problem in that they may be burned or broken by a fire or the like.

### BRIEF SUMMARY OF THE INVENTION

The invention has been conducted under the above-mentioned circumstances. In a first aspect of the invention, it is an object of the invention to provide a method of storing information of a work in which correspondence relationships between the information and the work are not lost, it is not required to suitably select the place for holding a recording medium, and the recording medium can be stuck.

In a second aspect of the invention, it is an object of the invention to provide a method of storing information of a work in which a held recording medium can be easily searched.

In a third aspect of the invention, it is an object of the invention to provide a method of storing information of a work in which a recording medium has high durability and can withstand fire, and the like.

In a fourth aspect of the invention, it is an object of the invention to provide a system for storing information of a work in which correspondence relationships between the information and the work are not lost, it is not required to suitably select the place for holding a recording medium, and the recording medium can be struck.

In a fifth aspect of the invention, it is an object of the invention to provide a system for storing information of a work in which a held recording medium can be easily searched.

In a sixth aspect of the invention, it is an object of the invention to provide a system for storing information of a work in which a recording medium has high durability and can withstand fire, and the like.

In a seventh aspect of the invention, it is an object of the invention to provide a medium for recording information of a work in which correspondence relationships between the information and the work are not lost, it is not required to suitably select the place for holding a recording medium, the recording medium can be stuck, and the held location can be easily searched.

In an eighth aspect of the invention, it is an object of the invention to provide an information safe using a non-contact type IC card which has high durability and can withstand fire, and the like.

In a ninth aspect of the invention, it is an object of the invention to provide an information safe using a non-contact type IC card which has high durability and can withstand fire, and the like, and the location of which can be easily searched.

In a tenth aspect of the invention, it is an object of the invention to provide an information safe using a non-contact type IC card which has high durability and can withstand fire, and the like, and in which intervention of an outsider can be prevented from occurring.

The method of storing information for repairing and dismantling a work according to the invention, which comprises writing information for repairing and dismantling a work into a non-contact type IC card in a non-contact manner, and leaving the IC card at or near the work.

In the method of storing information of a work, writing information for repairing and dismantling a work in a non-contact manner into the non-contact type IC card for storing information for repairing and dismantling a work, and leaving the IC card at or near the work. Therefore, it is possible to realize a method of storing information of a work in which, when information for repairing and dismantling is required, the information can be read out in a non-contact manner, correspondence relationships between the work and the information of the work are not lost, it is not required to suitably select the place for holding a recording medium, and the recording medium can be stuck.

The method of storing information of a work according to the invention further comprises leaving a tag which, when receiving a predetermined signal, transmits a signal indicative of a location thereof together with the IC card at or near the work whereby and the IC card is searched depending on the tag.

In the method of storing information of a work, the tag which, when receiving the predetermined signal, transmits the signal indicative of the location of the tag is left together with the IC card at or near the work, and the IC card is searched depending on the tag. Therefore, the held recording medium can be easily searched.

The method of storing information of a work according to the invention further comprises hermetically sealing a tag which, when receiving a predetermined signal, transmits a signal indicative of a location thereof together with the IC card by a synthetic resin whereby the IC card is searched depending on the tag.

In the method of storing information of a work, the tag which, when receiving the predetermined signal, transmits the signal indicative of the location of the tag is hermetically sealed together with the IC card by the synthetic resin, and the IC card is searched depending on the tag. Therefore, the held recording medium can be easily searched.

The method of storing information of a work according to the invention further comprises hermetically sealing the IC card or the synthetic resin by a noncombustible heat insulating film.

In the method of storing information of a work, the IC card or the synthetic resin is hermetically sealed by the noncombustible heat insulating film. Therefore, it is possible to realize a method of storing information of a work in which a recording medium has high durability and can withstand fire, and the like.

The system for storing information of a work according to the invention is a system for storing information for repairing and dismantling a work comprising a non-contact type IC card which is to be left at or near the work, and means for writing the information for repairing and dismantling into the IC card in a non-contact manner.

In the system for storing information of a work, the non-contact type IC card which is to store information for repairing and dismantling a work is held by the work. The writing means writes information for repairing and dismantling in a non-contact manner into the IC card which has not yet been held by the work or has been held by the work. Therefore, it is possible to realize a system for storing information of a work in which information for repairing and dismantling can be read out in a non-contact manner, correspondence relationships between the information and the work are not lost, it is not required to suitably select the place for holding a recording medium, and holding of the recording medium can be stuck.

The system for storing information of a work according to the invention further comprises a tag which, when receiving a predetermined signal, transmits a signal indicative of a location thereof, and which is to be left together with the IC card at or near the work, and means for transmitting the predetermined signal, and for receiving the signal transmitted by the tag to search the tag.

In the system for storing information of a work, the tag which, when receiving the predetermined signal, transmits the signal indicative of the location of the tag is left together with the IC card at or near a work. The searching means transmits the predetermined signal and receives the signal transmitted by the tag to search the tag. According to this configuration, it is possible to realize a system for storing information of a work in which a recording medium held on a work can be easily searched.

The system for storing information of a work according to the invention is characterized in that the IC card is hermetically sealed by a synthetic resin together with a tag which, when receiving a predetermined signal, transmits a signal indicative of a location thereof, and the system further comprises means for transmitting the predetermined signal, and for receiving the signal transmitted by the tag to search the tag.

In the system for storing information of a work, the IC card is hermetically sealed by a synthetic resin together with the tag which, when receiving the predetermined signal, transmits the signal indicative of the location of the tag, and the searching means transmits the predetermined signal and receives the signal transmitted by the tag to search the tag. According to this configuration, it is possible to realize a system for storing information of a work in which a recording medium held on a work can be easily searched.

The system for storing information of a work according to the invention is characterized in that the IC card or the synthetic resin is hermetically sealed by a noncombustible heat insulating film.

In the system for storing information of a work, the IC card or the synthetic resin is hermetically sealed by the noncombustible heat insulating film. Therefore, it is possible to realize a system for storing information of a work in which a recording medium has high durability and can withstand fire, and the like.

The medium for recording information for repairing and dismantling a work according to the invention comprises a non-contact type IC card, and a tag which, when receiving a predetermined signal, transmits a signal indicative of a location thereof, and the tag and the IC card are hermetically sealed by a synthetic resin.

The medium for recording information of a work is configured so that the non-contact type IC card which is to store information for repairing and dismantling a work, and the tag which, when receiving the predetermined signal, transmits the signal indicative of the location of the tag are hermetically sealed by a synthetic resin. Therefore, information for repairing and dismantling can be read out from the IC card in a non-contact manner. Moreover, it is possible to realize a medium for recording information of a work in which correspondence relationships between the work and the information are not lost, it is not required to suitably select the place for holding the recording medium, the recording medium can be stuck, and the holding location can be easily searched.

The information safe according to the invention comprises: a storing section which stores information; an input/output section which receives in a non-contact manner information to be stored into the storing section, and which outputs in a non-contact manner information stored in the storing section; a CPU which controls the storing section and the input/output section; a coil which receives and transmits signals that are to be input/output by the input/output section, and which supplies a power for the input/output section; a protective layer which protects the storing section, the input/output section, the CPU, and the coil from an external force; an anticorrosive film which hermetically seals and protects the protective layer, the storing section, the input/output section, the CPU, and the coil from chemical erosion; and a noncombustible heat insulating film which hermetically seals the anticorrosive film to protect the storing section, the input/output section, the CPU, and the coil from external heat.

In the information safe, the storing section stores information, and the input/output section inputs in a non-contact manner information to be stored in the storing section, and outputs in a non-contact manner information stored in the storing section. The CPU controls the storing section and the input/output section, and the coil transmits and receives signals that are to be output/input by the input/output section, and supplies a power for the input/output section. The protective layer protects the storing section, the input/output section, the CPU, and the coil from an external force, and the anticorrosive film hermetically seals and protects the protective layer, the storing section, the input/output section, the CPU, and the coil from chemical erosion. The noncombustible heat insulating film hermetically seals the anticorrosive film to protect the storing section, the input/output section, the CPU, and the coil from external heat. According to this configuration, it is possible to realize an information safe using a non-contact type IC card which has high durability and can withstand fire, and the like.

The information safe according to the invention is characterized in that the information safe further comprises a tag which is protected in the same manner as the storing section, the input/output section, the CPU, and the coil, and which, when receiving a predetermined signal, transmits a signal indicative of a location thereof.

In the information safe, when the tag which is protected in the same manner as the storing section, the input/output section, the CPU, and the coil receives the predetermined signal, the tag transmits the signal indicative of the location of the tag. Therefore, it is possible to realize an information safe using a non-contact type IC card which has high durability and can withstand fire, and the like, and the location of which can be easily searched.

The information safe according to the invention is characterized in that, the input/output section is enabled to input/output information when a password data is input.

In the information safe, when a password data is input, the input/output section is enabled to input/output information. Therefore, it is possible to realize an information safe using a non-contact type IC card which has high durability and can withstand fire, and the like, and in which intervention of an outsider can be prevented from occurring.

The above and further objects and features of the invention will more fully be apparent from the following detailed description with accompanying drawings.

### BRIEF DESCRIPTION OF THE SEVERAL VIEWS OF THE DRAWING

Fig. 1 is a block diagram showing the configuration of an embodiment of the method of storing information of a work, the system for storing information of a work, and the medium for recording information of a work according to the invention;
Fig. 2 is a block diagram schematically showing the configuration of a storing section;
Fig. 3 is a diagram illustrating a manner of using the system for storing information of a work according to the invention, in a house;
Fig. 4 is a diagram illustrating a manner of using the system for storing information of a work according to the invention, in an office building;
Fig. 5 is a diagram illustrating a manner of using the system for storing information of a work according to the invention, in a telephone pole;
Fig. 6A is a partly sectional front view showing a configuration example of the medium for recording information of a work according to the invention;
Fig. 6B is a sectional view showing the configuration example of the medium for recording information of a work according to the invention;
Fig. 7 is a diagram illustrating a manner of using the system for storing information of a work according to the invention, in a bridge;
Fig. 8 is a diagram illustrating a manner of using the system for storing information of a work according to the invention, in a tunnel;
Fig. 9 is a sectional view showing the configuration of an embodiment of the information safe according to the invention;
Fig. 10 is a block diagram showing an example of the internal configuration of the information safe;
Fig. 11 is a diagram illustrating a manner of using the information safe;
Fig. 12 is a sectional view showing the configuration of an embodiment of the medium for recording information of a work which is used in the method of storing information of a work and the system for storing information of a work according to the invention;
Fig. 13A is a partly sectional front view showing a configuration example of the information safe according to the invention; and
Fig. 13B is a sectional side view showing the configuration example of the information safe according to the invention.

### DETAILED DESCRIPTION OF THE INVENTION

Hereinafter, the invention will be described with reference to the accompanying drawings showing its embodiments.

### Embodiment 1.

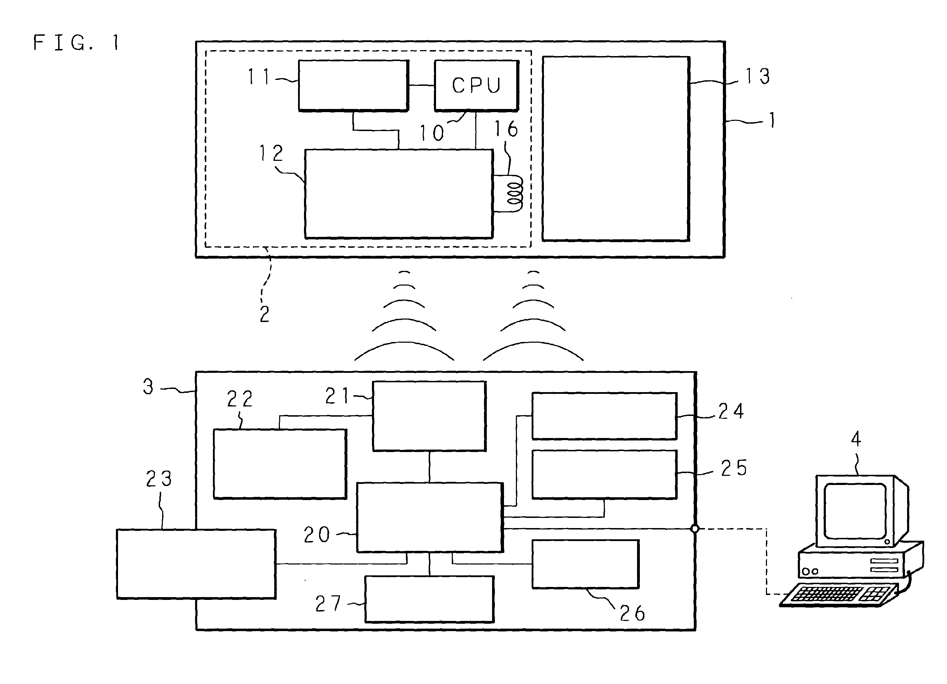

Fig. 1 is a block diagram showing the configuration of an embodiment of the method of storing information of a work, the system for storing information of a work, and the medium for recording information of a work according to the invention. In the system for storing information of a work, a medium 1 for recording information of a work comprises: an IC card 2 having: a CPU 10; a storing section 11 which stores various data; a data transmitting and receiving section 12 (input/output section) which transmits and receives data to and from a reader/writer 3 (writing means); and a sheet coil 16 (coil) which supplies an external power, and receives an external signal and transmits a signal to the outside; and a tag 13 which, when receiving a predetermined signal, transmits a signal indicative of the location of the tag. In the same manner as the IC card 2, the tag 13 has a CPU, a data transmitting and receiving section, a storing section, and a sheet coil which are not shown.

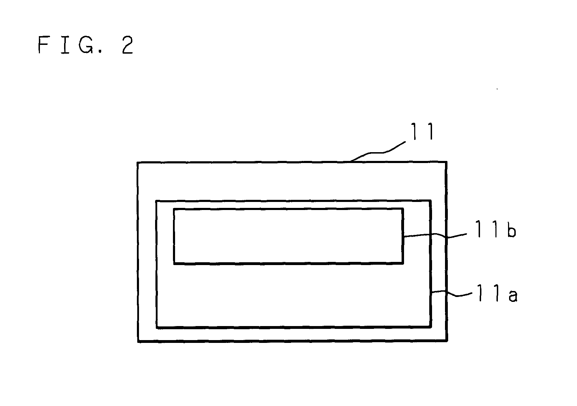

Fig. 2 is a block diagram schematically showing the configuration of the storing section 11. The storing section 11 stores: information 11b for repairing and including photographs of design drawings, the design specification, the working procedure, and the like which constitute information for repairing a work; and information 11a for dismantling and including the information 11b for repairing, the compositions of structural materials, methods of disposing and recycling the materials, etc.

The work information recording medium 1 is configured in the following manner. A cavity is formed in a synthetic resin-made card substrate of the IC card 2. An adhesive agent is applied to the inside of the formed cavity. An IC module of the IC card 2, the sheet coil 16, and the tag 13 are bonded to the substrate to form a card which is similar to a usual IC card. The medium is hermetically sealed by coating the side on which the IC module, the sheet coil 16, and the tag 13 are bonded, or both the sides with a low-temperature heating type coating agent.

The reader/writer 3 comprises: a reading/writing section 21 which performs a process of reading/writing data in a non-contact manner on the IC card 2 that is within a predetermined distance; an error detecting section 22 which detects an error in the reading/writing process; a searching section 24 which transmits a predetermined signal for searching the tag 13, and receives a signal from the tag 13 to search the tag 13; an operating section 27 which is operated by the operator; a displaying section 25 which displays a data that is to be read/written by the reading/writing section 21, and a data (data indicating the level of the reception signal) that is to be used by the searching section 24; a storing section 26 which stores data that are to be read/written by the reading/writing section 21; a data processing section 20 which includes a CPU and an MPU, and which is connected to the above-mentioned sections to receive and transmit signals; and an abnormality detecting section 23 which detects an abnormality of the reader/writer 3.

When the error detecting section 22 detects an error such as that in which, even when the operating section 27 has issued writing instructions, a data is not actually written into the IC card 2, and that in which the IC card 2 is rapidly made closer to or remoter from the reader/writer 3 and the reading/writing process is not correctly performed, the section outputs a fault signal. The error detecting section 22 detects also whether the IC card 2 exists within an appropriate distance from the reader/writer 3 or not.

The IC card 2 has a function of inhibiting an unauthorized reading/writing process. The data processing section 20 controls the protect process. When the reader/writer 3 is disassembled without proper authorization, the abnormality detecting section 23 detects the unauthorized disassembly. When this detecting function operates, program data for unauthorized reading/writing protection which are stored in the data processing section 20 are erased.

Between the IC card 2 and the reader/writer 3, data transmission and reception can be performed in a non-contact condition (a gap of about 10 cm) by using electromagnetic coupling, so that, in a non-contact manner, the reader/writer 3 can read data from the IC card 2 and write data into the IC card 2.

The searching section 24 can transmit the predetermined signal to the tag 13 which exists within a range of several to about ten meters, and receive a signal which is resonantly or modulatingly reflected from the tag 13 (the tag 13 has a storage capacity of about several bits). The operator can know the position of the work information recording medium 1 (the tag 13), from the level and direction of the received signal.

In a state where the reader/writer 3 is connected to a personal computer 4, the reader/writer 3 receives data which are to be written into the IC card 2, and temporarily stores the data into the storing section 26. In many cases, in a state where the reader/writer 3 is disconnected from the personal computer 4, the reader/writer 3 is carried to the job site, and the data which are stored in the storing section 26 are then written into the IC card 2.

In many cases, in a state where the reader/writer 3 is disconnected from the personal computer 4, the reader/writer is carried to the job site, and data which are read from the IC card 2 are then stored into the storing section 26 and displayed on the displaying section 25. Alternatively, in an office, in a state where the reader/writer 3 is connected to the personal computer 4, the data which are stored in the storing section 26 are sent to the personal computer 4. The personal computer 4 outputs the sent data by displaying the data on a display screen or printing the data onto a sheet.

The reader/writer 3 may perform an operation of writing/reading data in the office or the job site in a state where the reader/writer 3 is connected to the portable personal computer 4.

Hereinafter, manners of using the system for storing information of a work according to the invention will be described.

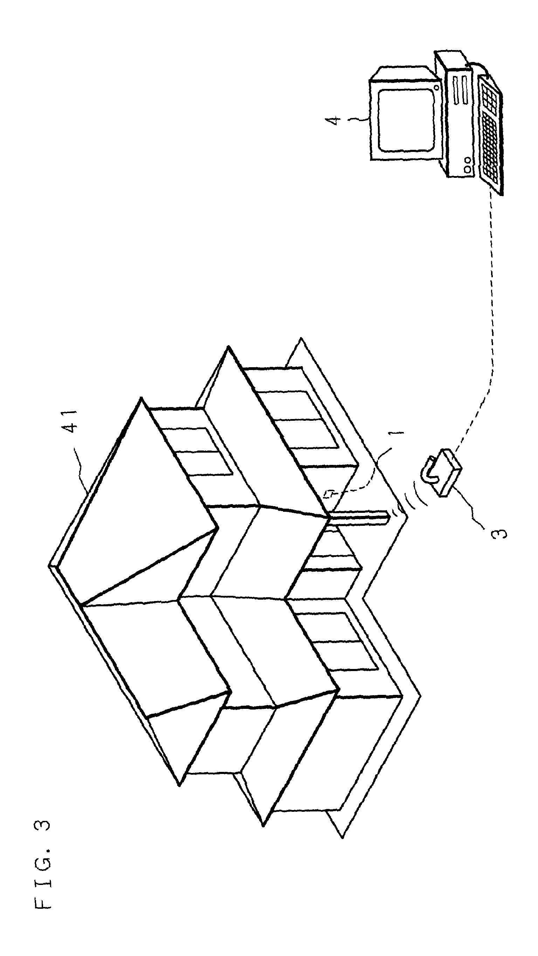

Fig. 3 is a diagram illustrating a manner of using the system for storing information of a work according to the invention, in a house.

In the case of a house 41, during a period when the house 41 is under construction, the work information recording medium 1 is embedded in, for example, the wall or the floor in the vicinity of the entrance, or buried under paving stone. Of course, also in the case where the house is not a newly built one, the medium may be embedded or buried, or, in order to simplify the work, the medium may be stuck to an upper portion of a wall which is beyond ordinary reach.

Next, in a state where the reader/writer 3 is connected to the personal computer 4, the reader/writer 3 receives from the personal computer 4 information for repairing and including design drawings, the design specification, and the like which constitute information for repairing the house 41, and information for dismantling and including the compositions of building materials, methods of disposing and recycling the materials, etc. The received information is stored into the storing section 26.

Thereafter, the reader/writer 3 is disconnected from the personal computer 4, and then carried to the job site. The reader/writer 3 writes the information for repairing and that for dismantling which have been stored into the storing section 26, into the IC card 2 of the above-mentioned work information recording medium 1.

When the information for repairing or dismantling the house 41 is required, the searching section 24 of the reader/writer 3 searches for the tag 13 of the work information recording medium 1 to confirm the position of the IC card 2. The reader/writer 3 reads the information for repairing or that for dismantling from the IC card 2, and the information is stored into the storing section 26.

Then, if necessary, the information stored in the storing section 26 is displayed on the displaying section 25 in the job site. Alternatively, in an office, in a state where the reader/writer 3 is connected to the personal computer 4, the information which has been stored into the storing section 26 is sent to the personal computer 4. The personal computer 4 outputs the sent information by displaying the data on the display screen or printing the data onto a sheet.

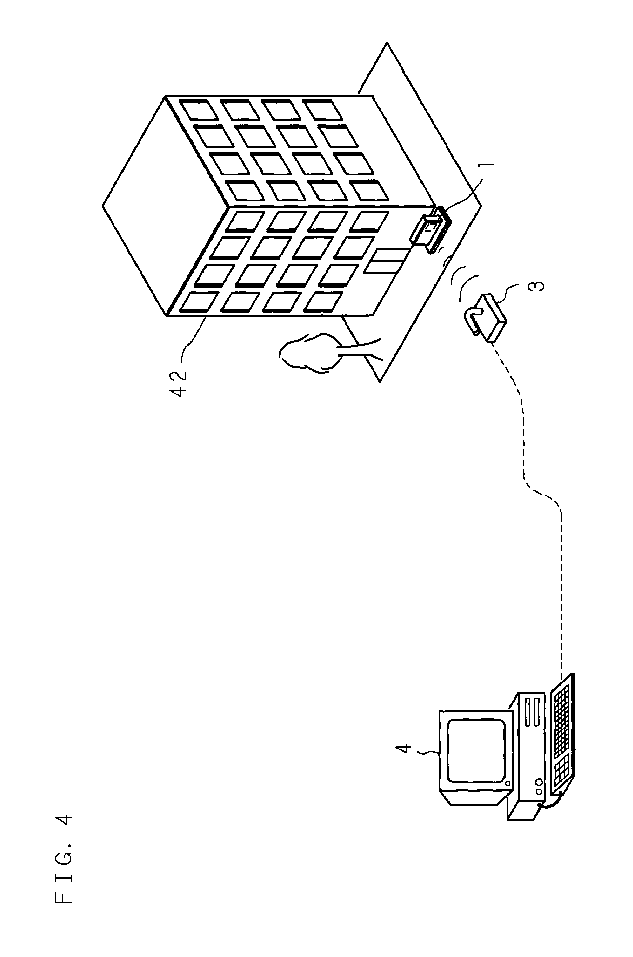

Fig. 4 is a diagram illustrating a manner of using the system for storing information of a work according to the invention, in an office building.

In the case of an office building 42, during a period when the office building 42 is under construction, the work information recording medium 1 is embedded in, for example, the wall or the floor in the vicinity of the entrance, or buried under paving stone. Of course, also in the case where the office building is not a newly built one, the medium may be embedded or buried, or, in order to simplify the work, the medium may be stuck to an upper portion of a wall which is beyond ordinary reach.

Next, in a state where the reader/writer 3 is connected to the personal computer 4, the reader/writer 3 receives from the personal computer 4 information for repairing and including design drawings, the design specification, and the like which constitute information for repairing the office building 42, and information for dismantling and including the compositions of building materials, methods of disposing and recycling the materials, etc. The received information is stored into the storing section 26.

Thereafter, the reader/writer 3 is disconnected from the personal computer 4, and then carried to the job site. The reader/writer 3 writes the information for repairing and that for dismantling which have been stored into the storing section 26, into the IC card 2 of the above-mentioned work information recording medium 1.

When the information for repairing or dismantling the office building 42 is required, the searching section 24 of the reader/writer 3 searches for the tag 13 of the work information recording medium 1 to confirm the position of the IC card 2. The reader/writer 3 reads the information for repairing or that for dismantling from the IC card 2, and the information is stored into the storing section 26.

Then, if necessary, the information stored in the storing section 26 is displayed on the displaying section 25 in the job site. Alternatively, in an office, in a state where the reader/writer 3 is connected to the personal computer 4, the information which has been stored into the storing section 26 is sent to the personal computer 4. The personal computer 4 outputs the sent information by displaying the data on the display screen or printing the data onto a sheet.

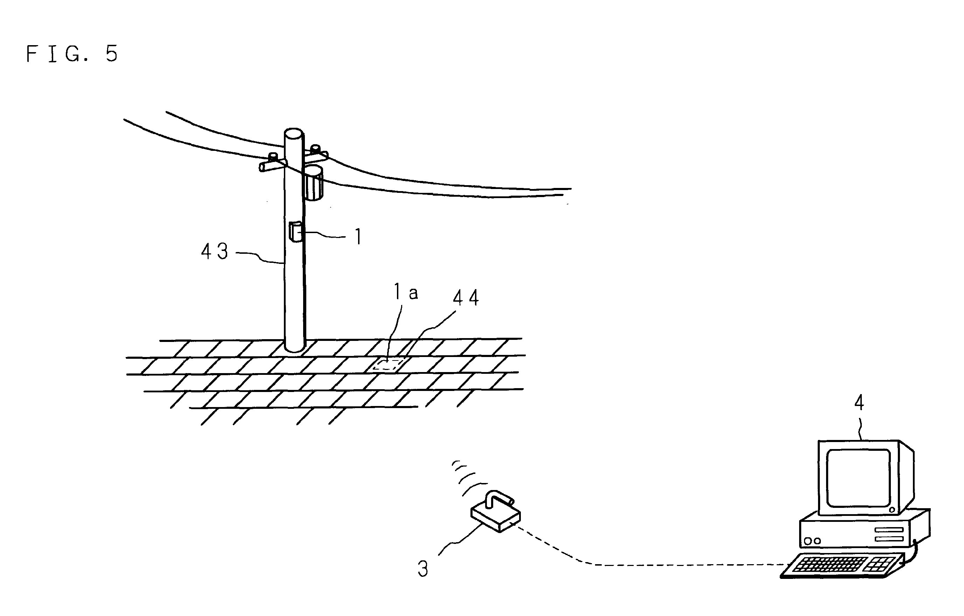

Fig. 5 is a diagram illustrating a manner of using the system for storing information of a work according to the invention, in a telephone pole.

In the case of a telephone pole 43, in a state where the reader/writer 3 is connected to the personal computer 4, the reader/writer 3 receives from the personal computer 4 information for repairing and including design drawings, the design specification, and the like which constitute information for repairing the electric pole 43 and a transformer and the like that are attached to the pole, and information for dismantling and including the compositions of building materials, methods of disposing and recycling the materials, etc. The received information is stored into the storing section 26.

Thereafter, the reader/writer 3 writes the information for repairing and that for dismantling which have been stored into the storing section 26, into the IC card 2 of the above-mentioned work information recording medium 1.

Next, the work information recording medium 1 in which the writing process has been performed on the IC card 2 is carried to the job site, and then stuck to an upper portion of the electric pole 43 or the like which is beyond ordinary reach. Since the work information recording medium 1 has a card-like shape, the medium can be stuck to the curved surface of the electric pole 43 or the like without undue stress.

When the information for repairing or dismantling the electric pole 43 and the transformer and the like that are attached to the pole is required, the searching section 24 of the reader/writer 3 searches for the tag 13 of the work information recording medium 1 to confirm the position of the IC card 2 (in some case, the searching is not necessary). The reader/writer 3 reads the information for repairing or that for dismantling from the IC card 2, and the information is stored into the storing section 26.

Then, if necessary, the information stored in the storing section 26 is displayed on the displaying section 25 in the job site. Alternatively, in an office, in a state where the reader/writer 3 is connected to the personal computer 4, the information which has been stored into the storing section 26 is sent to the personal computer 4. The personal computer 4 outputs the sent information by displaying the data on the display screen or printing the data onto a sheet.

Alternatively, a work information recording medium 1a into which information (including a layout drawing) for repairing or dismantling the electric pole 43 and a buried structure under the road is stored may be embedded below paving stone 44 of a footpath or into paving asphalt.

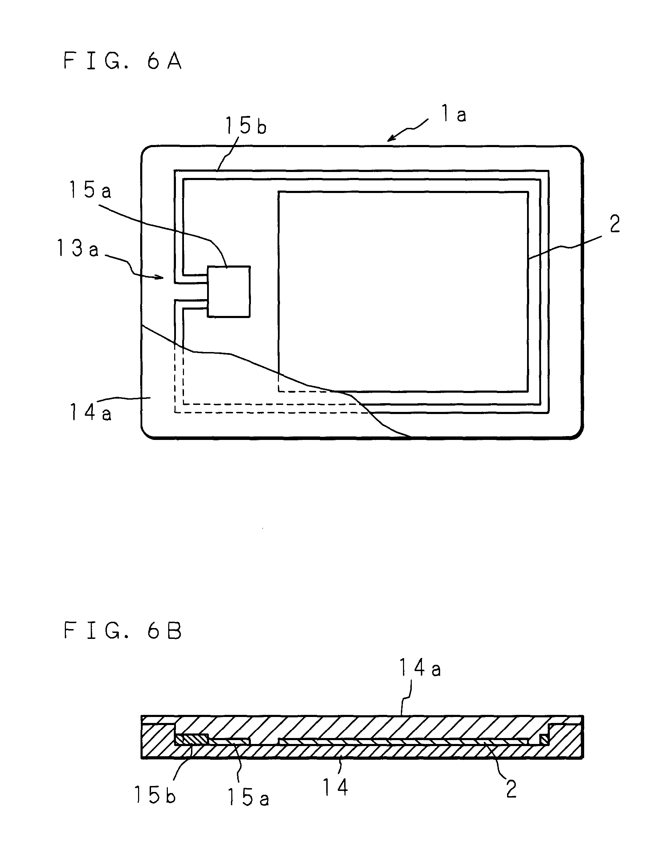

In the alternative, for example, the work information recording medium 1a may be produced as shown in the partly sectional front view of Fig. 6A and the sectional side view of Fig. 6B so as to further enhance durability and strength.

In the medium, an IC tag which is proposed in Japanese Utility Model Registration No. 3,058,339 is used. An IC chip 15a and an antenna 15b (coil) of a tag 13a, and the IC card 2 are bonded onto a plate-like base member 14 which is formed by a thermoplastic resin, and then covered by a synthetic resin layer 14a.

The antenna 15b of the tag 13a is produced by stamping metal foil by a hot stamping process, and has a large sectional area. Therefore, the sensitivity is so excellent that the tag 13a has a wide searchable range. Since the antenna 15b is not formed by an etching process, environmental pollution due to waste water does not occur.

Since the base member 14 is made of a synthetic resin, the thickness of the base member 14 can be freely set by using the injection molding technique, the extrusion molding technique, or the like. When the thickness is made larger, it is possible to realize the work information recording medium 1a of higher strength.

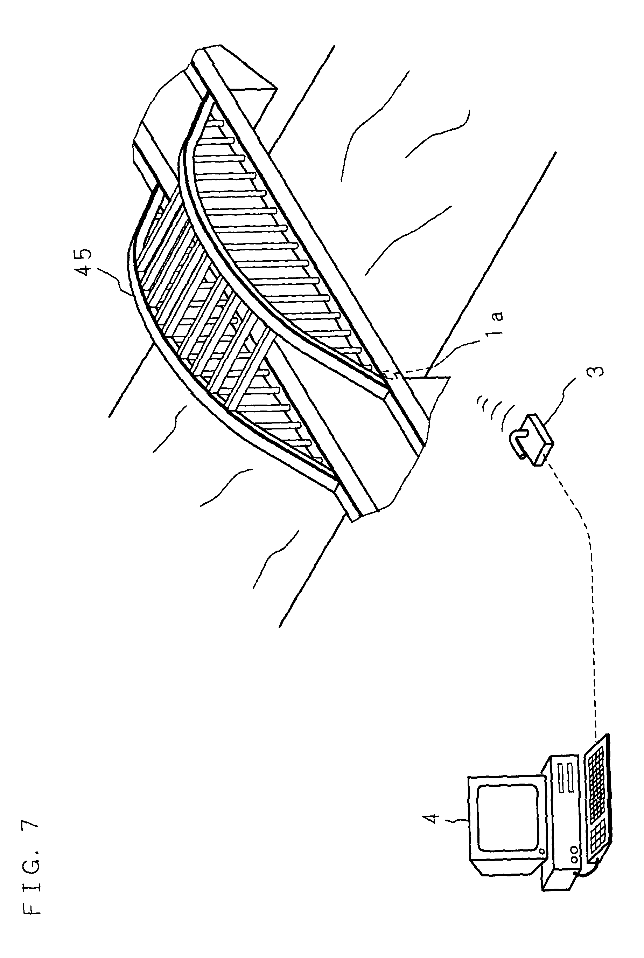

Fig. 7 is a diagram illustrating a manner of using the system for storing information of a work according to the invention, in a bridge.

In the case of a bridge 45, during a period when the bridge 45 is under construction, the work information recording medium 1a is buried into, for example, a bridge pile in the vicinity of the foot of the bridge or under a paving stone. Of course, also in the case where the bridge is not a newly built one, the medium may be embedded or buried, or the medium may be stuck to a portion of a bridge pier which is beyond ordinary reach. As described above, the work information recording medium 1a is provided with higher strength. Even when the medium 1a is buried immediately below the road surface and on a bridge pile, therefore, there arises no problem in durability.

Next, in a state where the reader/writer 3 is connected to the personal computer 4, the reader/writer 3 receives from the personal computer 4 information for repairing and including design drawings, the design specification, and the like which constitute information for repairing the bridge 45, and information for dismantling and including the compositions of building materials, methods of disposing and recycling the materials, etc. The received information is stored into the storing section 26.

Thereafter, the reader/writer 3 is disconnected from the personal computer 4, and then carried to the job site. The reader/writer 3 writes the information for repairing and that for dismantling which have been stored into the storing section 26, into the IC card 2 of the above-mentioned work information recording medium 1a.

When the information for repairing or dismantling the bridge 45 is required, the searching section 24 of the reader/writer 3 searches for the tag 13a of the work information recording medium 1a to confirm the position of the IC card 2. The reader/writer 3 reads the information for repairing or that for dismantling from the IC card 2, and the information is stored into the storing section 26.

Then, if necessary, the information stored in the storing section 26 is displayed on the displaying section 25 in the job site. Alternatively, in an office, in a state where the reader/writer 3 is connected to the personal computer 4, the information which has been stored into the storing section 26 is sent to the personal computer 4. The personal computer 4 outputs the sent information by displaying the data on the display screen or printing the data onto a sheet.

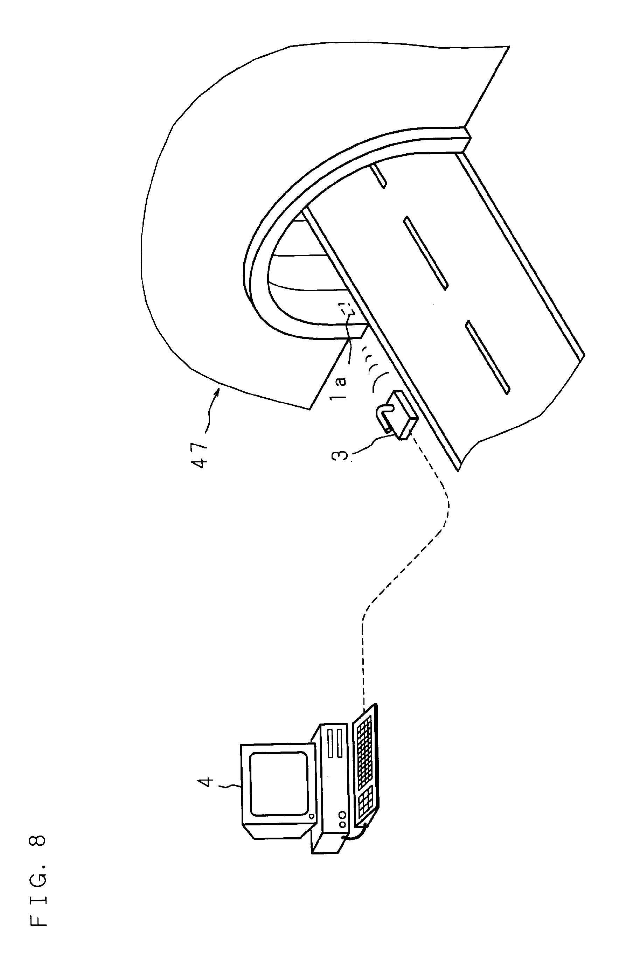

Fig. 8 is a diagram illustrating a manner of using the system for storing information of a work according to the invention, in a tunnel.

In the case of a tunnel 47, during a period when the tunnel 47 is under construction, the work information recording medium 1a is embedded into, for example, a side wall or buried under the road surface in the vicinity of the entrance. Of course, also in the case where the tunnel is not a newly built one, the medium may be embedded or buried, or the medium may be stuck to a portion of a side wall which is beyond ordinary reach. As described above, the work information recording medium 1a is provided with higher strength. Even when the medium 1a is buried immediately below the road surface, therefore, there arises no problem in durability.

Next, in a state where the reader/writer 3 is connected to the personal computer 4, the reader/writer 3 receives from the personal computer 4 information for repairing and including design drawings, the design specification, and the like which constitute information for repairing the tunnel 47, and information for dismantling and including the compositions of building materials, methods of disposing and recycling the materials, etc. The received information is stored into the storing section 26.

Thereafter, the reader/writer 3 is disconnected from the personal computer 4, and then carried to the job site. The reader/writer 3 writes the information for repairing and that for dismantling which have been stored into the storing section 26, into the IC card 2 of the above-mentioned work information recording medium 1a.

When the information for repairing or dismantling the tunnel 47 is required, the searching section 24 of the reader/writer 3 searches for the tag 13a of the work information recording medium 1a to confirm the position of the IC card 2. The reader/writer 3 reads the information for repairing or that for dismantling from the IC card 2, and the information is stored into the storing section 26.

Then, if necessary, the information stored in the storing section 26 is displayed on the displaying section 25 in the job site. Alternatively, in an office, in a state where the reader/writer 3 is connected to the personal computer 4, the information which has been stored into the storing section 26 is sent to the personal computer 4. The personal computer 4 outputs the sent information by displaying the data on the display screen or printing the data onto a sheet.

### Embodiment 2.

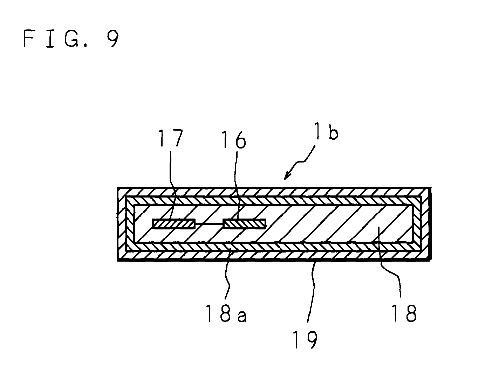

Fig. 9 is a sectional view showing the configuration of an embodiment of the information safe according to the invention. In the figure, the vertical directions are shown in a magnified manner. The information safe 1b is an information recording medium which uses a heat insulating film configured by, for example, a heat insulating material such as calcium silicate or silica gel to enhance the fire resistance so as to be configured as though it is a safe. An IC module 17 and a sheet coil 16 (coil) of a non-contact type IC card in which an information reading/writing process is performed in a non-contact manner are covered by a protective layer 18 which protects the components from an external force. The covering protective layer 18, the IC module 17, and the sheet coil 16 are hermetically sealed by an anticorrosive film 18a which protects them from chemical erosion. Furthermore, the sealing anticorrosive film 18a is hermetically sealed by a noncombustible heat insulating film 19 which protects the IC module 17 and the sheet coil 16 from external heat.

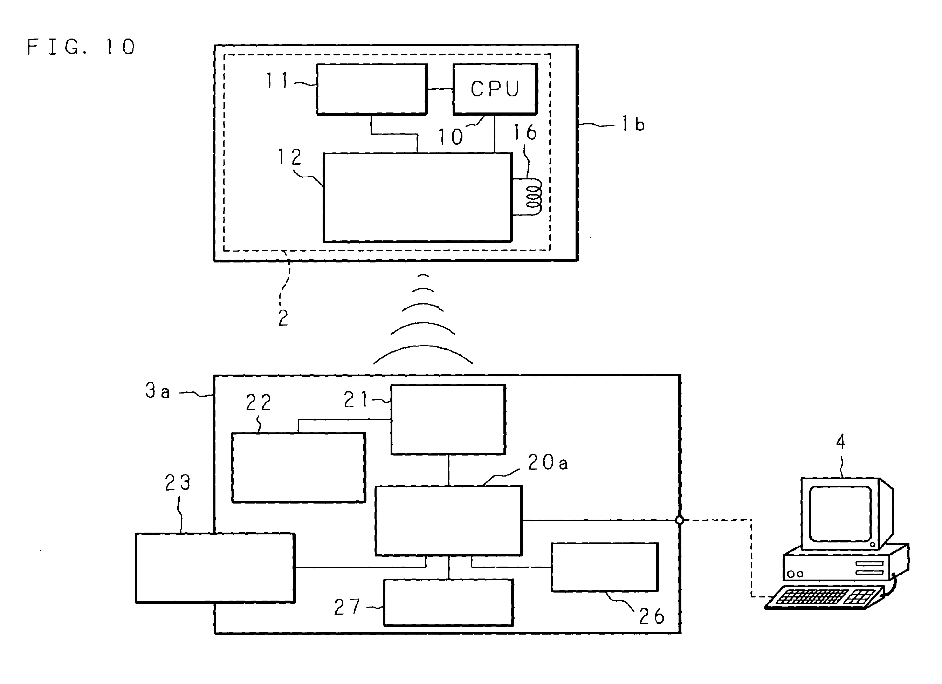

Fig. 10 is a block diagram showing an example of the internal configuration of the information safe 1b. The information safe 1b comprises the above-mentioned IC card 2 having: the CPU 10; the storing section 11 which stores various data; the data transmitting and receiving section 12 (input/output section) which transmits and receives data to and from a reader/writer 3a; and a sheet coil 16 which supplies an external power, and receives an external signal and transmits a signal to the outside. The CPU 10, the storing section 11, and the data transmitting and receiving section 12 are integrated with the IC module 17.

The IC card 2 has a function of inhibiting an unauthorized reading/writing process, so that, only when a predetermined password data is input, the reading/writing process is enabled. In the reader/writer 3a, a data processing section 20a controls this function. When the reader/writer 3a is disassembled without proper authorization, the abnormality detecting section 23 detects the unauthorized disassembly. When this detecting function operates, program data for unauthorized reading/writing protection which are stored in the data processing section 20a are erased. The other configuration of the reader/writer 3a is identical with that of the reader/writer 3 shown in Fig. 1. The identical portions are denoted by the same reference numerals, and their description is omitted.

In the thus configured information safe 1b, between the IC card 2 and the reader/writer 3a, data transmission and reception can be performed in a non-contact condition (a gap of about 10 cm) by using electromagnetic coupling, so that, in a non-contact manner, the reader/writer 3a can read data from the IC card 2 and write data into the IC card 2.

In a state where the reader/writer 3a is connected to the personal computer 4, the reader/writer receives data which are to be written into the IC card 2, and writes the received data into the IC card 2 in a non-contact manner.

In many cases, in a state where the reader/writer 3a is disconnected from the personal computer 4, the data which are read from the IC card 2 are stored into the storing section 26 and displayed on the displaying section 25. Alternatively, in a state where the reader/writer 3a is connected to the personal computer 4, the data which are stored in the storing section 26 are sent to the personal computer 4. The personal computer 4 outputs the sent data by displaying the data on a display screen or printing the data onto a sheet.

The reader/writer 3a may perform an operation of writing/reading data in a state where the reader/writer 3a is connected to the portable personal computer 4.

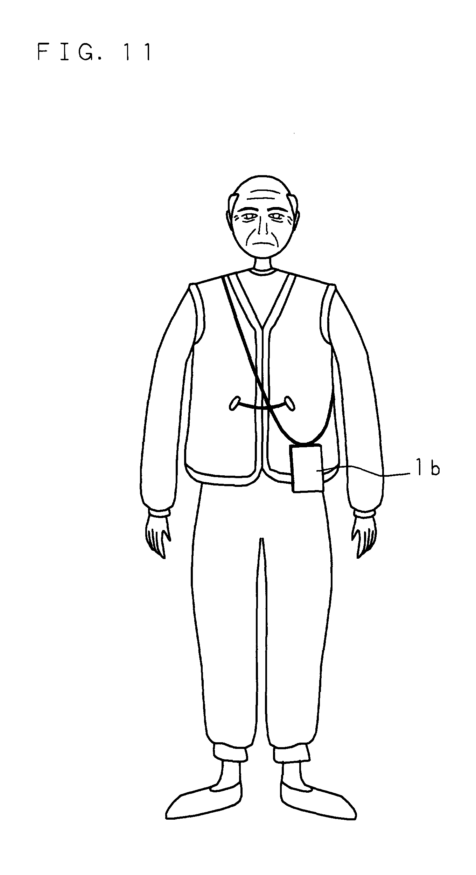

For example, personal data such as the ID code, the address, and medical data of a person may be previously stored into the IC card 2 of the information safe 1b, and the information safe 1b is carried by the person as shown in Fig. 11. Therefore, the stored contents of the IC card 2 can be preserved. When the person encounters a traffic accident, a fire, or the like, the stored data will be useful in emergency treatment, notification to the family, and the like. In a group of a large number of persons, such as an army, the information safe 1b may be used as an identification tag of a person.

### Embodiment 3.

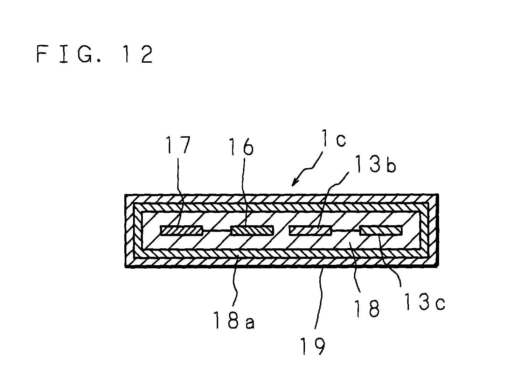

Fig. 12 is a section view showing the configuration of an embodiment of the medium for recording information of a work which is used in the method of recording information of a work, and in the system for storing information of a work according to the invention. In the figure, the vertical directions are shown in a magnified manner. The medium for recording information of a work is an information safe 1c which uses a heat insulating film to enhance the fire resistance so as to be configured as though it is a safe. An IC module 17 of a non-contact type IC card in which an information reading/writing process is performed in a non-contact manner, a sheet coil 16 of the IC card, an IC chip 13b of a tag which, when receiving a predetermined signal, transmits a signal indicative of the location of the tag, and a sheet coil 13c of the tag are covered by a protective layer 18 which protects the components from an external force.

In the information safe 1c, the covering protective layer 18, the IC module 17, the sheet coil 16, the IC chip 13b, and the sheet coil 13c are hermetically sealed by the anticorrosive film 18a which protects them from chemical erosion. Furthermore, the sealing anticorrosive film 18a is hermetically sealed by the noncombustible heat insulating film 19 which protects the IC module 17, the sheet coil 16, the IC chip 13b, and the sheet coil 13c from external heat.

The internal configuration of the information safe 1c is identical with that of the work information recording medium 1 which has been described with reference to Fig. 1. The IC module 17 and the sheet coil 16 constitute the IC card 2 (Fig. 1), and the IC chip 13b and the sheet coil 13c constitute the tag 13 (Fig. 1). As the reader/writer (writing means) also, a reader/writer similar to the reader/writer 3 which has been described with reference to Fig. 1 is used. Therefore, description of the internal configuration of the reader/writer 3 of the information safe 1c is omitted.

The manner of using the system for storing information of a work according to the invention and the information safe 1c is similar to that of the work information recording medium 1 which has been described in Embodiment 1 in the cases where the work is the house 41 (Fig. 3), the office building 42 (Fig. 4), and the electric pole 43 (Fig. 5), except that the information safe 1c has higher fire resistance. Therefore, description of the manner is omitted.

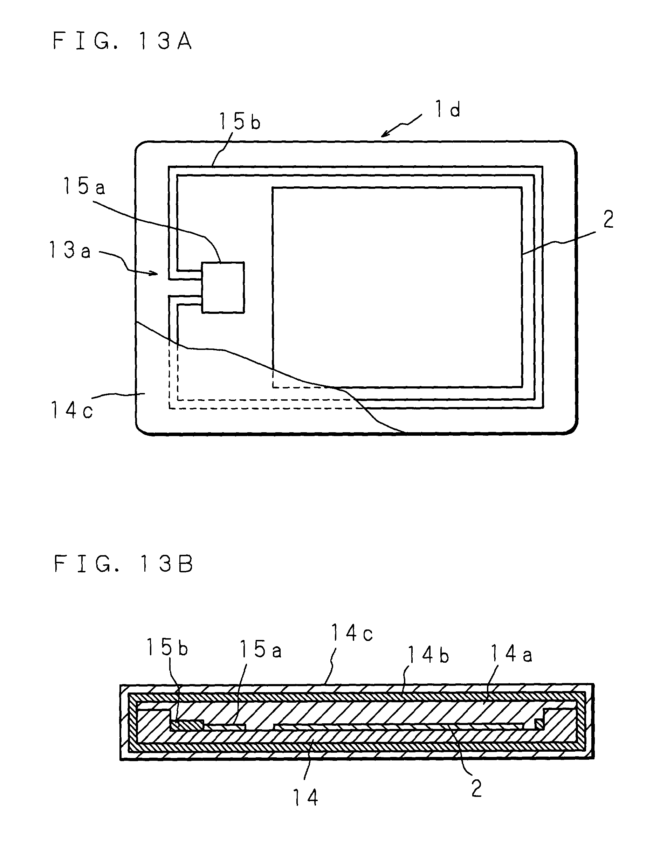

In the case where the information safe 1c is used in place of the work information recording medium 1a into which information (including a layout drawing) for repairing or dismantling the electric pole 43 (Fig. 5) and a buried structure under the road is to be stored, for example, the information safe 1c may be produced as an information safe 1d which is shown in the partly sectional front view of Fig. 13A and the sectional side view of Fig. 13B, so that the durability and strength are further enhanced.

In the information safe 1d, the IC tag which is proposed in Japanese Utility Model Registration No. 3,058,339 is used. The IC chip 15a and the antenna 15b of the tag 13a, and the IC card 2 are bonded onto the plate-like base member 14 which is formed by a thermoplastic resin, and then covered by the synthetic resin layer 14a. The covering protective layer 14a, the IC chip 15a, the antenna 15b, and the IC card 2 are hermetically sealed by an anticorrosive film 14b which protects them from chemical erosion. Furthermore, the sealing anticorrosive film 14b is hermetically sealed by a noncombustible heat insulating film 14c which protects the IC chip 15a, the antenna 15b, and the IC card 2 from external heat.

The antenna 15b of the tag 13a is produced by stamping metal foil by a hot stamping process, and has a large sectional area. Therefore, the sensitivity is so excellent that the tag 13a has a wide searchable range. Since the antenna 15b is not formed by an etching process, environmental pollution due to waste water does not occur.

Since the base member 14 is made of a synthetic resin, the thickness of the base member 14 can be freely set by using the injection molding technique, the extrusion molding technique, or the like. When the thickness is made larger, it is possible to realize the work information recording medium 1d of higher strength.

The manner of using the information safe 1d and the system for storing information of a work according to the invention is similar to that of the work information recording medium 1a which has been described in Embodiment 1 in the cases where the work is the buried structure under a road (Fig. 5), the bridge 45 (Fig. 7), and the tunnel 47 (Fig. 8), except that the information safe 1d has higher fire resistance. Therefore, description of the manner is omitted.

In the above, the manner of using the information safes 1c and 1d in the case where each member is used as a medium for recording information of a work has been described. Each of the information safes may be used as an article other than a medium for recording information of a work. For example, such an information safe may be mounted together with the reader/writer 3 on a vehicle, and, in place of the personal computer 4, a distance recorder of the vehicle, a voice recorder, an imaging device, and the like may be connected to the reader/writer 3. When information collected from these devices is always written into the information safe 1c or 1d, the information safe 1c or 1d can be used as a black box (voice recorder) which can leave a distance record, a voice record, a video record, etc. Of course, in an airplane, such an information safe may be used as a simple black box.

The IC card 2 in the embodiments described above is not restricted to a card standardized by the international standard (ISO) or the domestic standard (JIS), and may be realized by IC cards of various sizes and shapes.

## Claims

1. A method of storing information for repairing and dismantling a work(41~45, 47), which comprises writing the information for repairing and dismantling a work into a non-contact type IC card(2) in a non-contact manner, and leaving said IC card(2) at or near said work(41~45, 47).

2. A method of storing information of a work according to claim 1, further comprises leaving a tag(13,13a) which, when receiving a predetermined signal, transmits a signal indicative of a location thereof together with said IC card(2) at or near said work(41~45, 47) whereby said IC card(2) is searched depending on said tag(13, 13a).

3. A method of storing information of a work according to claim 1, further comprises hermetically sealing a tag(13, 13a) which, when receiving a predetermined signal, transmits a signal indicative of a location thereof together with said IC(2) card by a synthetic resin(14a) whereby said IC card(2) is searched depending on said tag(13, 13a).

4. A method of storing information of a work according to claim 1 or 3, further comprises hermetically sealing said IC card(2) or said synthetic resin(14a) by a noncombustible heat insulating film(14c, 19).

5. A system for storing information for repairing and dismantling a work(41~45, 47), comprising a non-contact type IC card(2) which is to be left at or near said work(41~45, 47), and a writing device(3, 3a) for writing the information for repairing and dismantling into said IC card(2) in a non-contact manner.

6. A system for storing information of a work according to claim 5, wherein said system further comprises a tag(13, 13a) which, when receiving a predetermined signal, transmits a signal indicative of a location thereof, and which is to be left together with said IC card(2) at or near said work(41~45, 47), and means(24) for transmitting said predetermined signal, and for receiving said signal transmitted by said tag(13, 13a) to search said tag(13, 13a).

7. A system for storing information of a work according to claim 5, wherein said IC card(2) is hermetically sealed by a synthetic resin(14a) together with a tag(13, 13a) which, when receiving a predetermined signal, transmits a signal indicative of a location thereof, and said system further comprises means(24) for transmitting said predetermined signal, and for receiving said signal transmitted by said tag(13, 13a) to search said tag(13, 13a).

8. A system for storing information of a work according to claim 5 or 7, wherein said IC card(2) or said synthetic resin(14a) is hermetically sealed by a noncombustible heat insulating film(14c, 19).

9. A medium for recording information for repairing and dismantling a work(41~45, 47), comprises a non-contact type IC card(2), and a tag(13, 13a) which, when receiving a predetermined signal, transmits a signal indicative of a location thereof, wherein said tag(13, 13a) and said IC card(2) are hermetically sealed by a synthetic resin(14a).

10. An information safe(1b, 1c, 1d) comprising: a storing section(11) which stores information; an input/output section(12) which receives in a non-contact manner information to be stored into said storing section(11), and which outputs in a non-contact manner information stored in said storing section(11); a CPU(10) which controls said storing section(11) and said input/output section(12); a coil(16) which receives and transmits signals that are to be input /output by said input/output section(12), and which supplies a power for said input /output section(12); a protective layer(18) which protects said storing section(11), said input/output section(12), said CPU(10), and said coil(16) from an external force; an anticorrosive film(18a) which hermetically seals and protects said protective layer(18), said storing section(11), said input/output section(12), said CPU(10), and said coil(16) from chemical erosion; and a noncombustible heat insulating film(19) which hermetically seals said anticorrosive film(18a) to protect said storing section(11), said input/output section(12), said CPU(10), and said coil(16) from external heat.

11. An information safe according to claim 10, further comprises a tag(13a:13b+13c) which is protected in the same manner as said storing section(11), said input/output section(12), said CPU(10), and said coil(16), and which, when receiving a predetermined signal, transmits a signal indicative of a location thereof.

12. An information safe according to claim 10 or 11, wherein said input/output section(12) is enabled to input/output information when a password data is input.
